# EUROPEAN PATENT APPLICATION

(11) **EP 3 157 223 A1**
(43) Date of publication of application: **19.04.2017**
(21) Application number: 15306630.3
(22) Date of filing: 14.10.2015
(51) Int. Cl.: H04L 29/06, H04L 12/28, H04Q 11/00

(54) **METHOD AND SYSTEMS FOR ASSOCIATING SUBSCRIBER IDENTIFICATION INFORMATION WITH A SUBSCRIBER-SIDE NETWORK TERMINATION IDENTIFIER**

(71) Applicant: ALCATEL LUCENT, 92100 Boulogne-Billancourt (FR)
(72) Inventor: Peeters, Ronny Jozef Leon, 2018 Antwerpen (BE)
(74) Representative: D'Halleweyn, Nele Veerle Trees Gertrudis

(57) **Abstract**

A method for associating subscriber identification information with an identifier of a subscriber-side network termination (SSNT), the SSNT being connected via a shared medium communication link (SMCL) to a provider-side network termination (PSNT), wherein the identifier of the SSNT is associated with an identifier of the SMCL, and wherein the identifier of the SMCL is associated with a network address allocated to a subscriber terminal (ST) connected to the SSNT and, via the SMCL, to the PSNT, the method comprising intercepting an internet access request from the ST, the request indicating the allocated network address; based on the indicated network address, determining the identifier of the SMCL; based on the determined identifier of the SMCL, determining the identifier of the SSNT; obtaining subscriber identification information from the ST; and associating the obtained subscriber identification information with the determined identifier of the SSNT.

## Description

### Field of Invention

The field of the invention relates to installation of network terminations of a shared medium communication link. Particular embodiments relate to a method for associating subscriber identification information with an identifier of a subscriber-side network termination (SSNT), to an authentication and registration server system for associating subscriber identification information with an identifier of a subscriber-side network termination (SSNT), to a network system therefor, and to a computer program product.

### Background

Subscriber-side installation of network terminations of shared medium communication links, wherein multiple subscribers can be connected to a same provider-side communication port, is complicated. Such installation requires a way for the provider to identify a network termination of a given subscriber - that is, the provider must be able to associate the subscriber with an identifier of the subscriber-side network termination.

Currently, service providers (in short 'providers', a.k.a. operators) require subscribers (a.k.a. end-users) to provide an identifier of their network termination using out-of-band infrastructure (i.e. a communication infrastructure independent from the shared medium communication link), since the communication link to be installed is not yet operational. This approach is cumbersome.

Alternatively, providers require expert subscriber-side installation - in other words, a trained technician must provide the identifier of the subscriber-side network termination at the subscriber's premises. This approach is costly.

### Summary

It is an aim of embodiments of the invention to simplify installation of shared medium communication links.

According to a first aspect of the invention, there is provided a method for associating subscriber identification information with an identifier of a subscriber-side network termination (SSNT). The SSNT is connected via a shared medium communication link (SMCL) to a provider-side network termination (PSNT). The identifier of the SSNT is associated with an identifier of the SMCL (i.e. an identifier representing, or identifying, a communication link on the shared medium; for example, a circuit ID in case of a Passive Optical Network). Further, the identifier of the SMCL is associated with a network address allocated to a subscriber terminal (ST) connected to the SSNT and, via the SMCL, to the PSNT. The method comprises the following steps: intercepting an internet access request from the ST, the request indicating the allocated network address; based on the indicated network address, determining the identifier of the SMCL (for example by querying for the association); based on the determined identifier of the SMCL, determining the identifier of the SSNT (for example by querying for the association, or, if the SSNT identifier is encoded in the SMCL identifier, by deducing); obtaining subscriber identification information from the ST; and associating the obtained subscriber identification information with the determined identifier of the SSNT.

Embodiments of the method according to the invention are based *inter alia* on the insight that internet access can (initially) be restrained to a limited network (which can also be a 'captive network') by the intercepting, in order to determine both the identifier of the SSNT and the subscriber identification information (e.g. the subscriber's username and password, or a unique key encoded on a physical device owned by the subscriber), based on communication from and to the subscriber-side network termination. The skilled person is well-aware of how to implement interception of user requests and redirection of the user request in any of a number of ways, e.g. using DNS (Domain Name System) Redirection, IP (Internet Protocol) Redirection, HTTP (HyperText Transfer Protocol) Redirection, restricted scope addressing, traffic blocking, etc., e.g. as described in Kumari et al. "Internet Engineering Task Force Internet-Draft: DHCP Captive-Portal" of January 13, 2014, which is incorporated herein by reference.

Thus, embodiments of the method according to the invention simplify installation of shared medium communication links, by making it easy for the subscriber to install the network termination by herself. The dependency on an out-of-band infrastructure (e.g. the availability of an internet-connected mobile phone) is overcome. Also, the cost of activating a new subscriber is reduced, since there is no need for a truck roll (i.e. the need to dispatch a technician in a vehicle such as a truck (whence the name) to install, move, or somehow reconfigure an item of equipment or a wire and cable system) anymore. Further, the risk of errors due to the complexity of current procedures is reduced.

In an embodiment, the method comprises provisioning the subscriber-side network termination (SSNT) in order to provide to the subscriber at least one service to which that subscriber is subscribed, based on the association of the subscriber identification information and the identifier of the SSNT. In this manner, the provider can provide to the subscriber the services to which the subscriber has subscribed (and only those).

In an embodiment, the method comprises connecting the subscriber terminal (ST) to the subscriber-side network termination (SSNT) and, via the shared medium communication link (SMCL), to the provider-side network termination (PSNT); and requesting allocation of a network address for the ST. The method further comprises: allocating a network address to a subscriber terminal (ST) connected to the SSNT and, via the SMCL, to the PSNT; associating the allocated network address with the identifier of the SMCL. In this manner, the subscriber need only connect a subscriber terminal, such as a personal computer or a smartphone or the like, to her subscriber-side network termination for automatic installation.

In an embodiment, the method comprises relaying the requesting of the allocation of a network address and the allocating of the network address; and based on the relaying, determining the identifier of the shared medium communication link and the allocated network address. In this manner, the association between the network address for the subscriber terminal and the identifier of the shared medium communication link can be efficiently obtained.

In an embodiment, the method comprises connecting the subscriber-side network termination (SSNT) to the shared medium communication link (SMCL); and providing the identifier of the SSNT to the provider-side network termination (PSNT) via the SMCL, for association with the identifier of the SMCL. In this manner, the network terminations can be setup for performing the remainder of the method.

In a further developed embodiment, the providing comprises examining communication on the shared medium communication link (SMCL) in order to detect a discovery window; and, when the discovery window is detected, sending therein the identifier of the subscriber-side network termination (SSNT) to the provider-side network termination (PSNT) via the SMCL. In this manner, the identifier of the SSNT can be provided to the PSNT effectively and unobtrusively.

A 'discovery window' is also known as a 'ranging window', or a 'quiet window', and is used on shared media using time division multiplex access schemes in order to allow newly attached devices to signal their presence without disturbing communication for devices that are already registered.

Alternatively or additionally, the providing comprises sending the identifier of the subscriber-side network termination (SSNT) to the provider-side network termination (PSNT) via the shared medium communication link (SMCL) using at least one of: a pre-determined frequency division multiplexing frequency or frequency range, a pre-determined code division multiplexing coding scheme, a carrier sense multiple access protocol.

In a specific embodiment, the subscriber-side network termination (SSNT) is an Optical Network Termination, the provider-side network termination (PSNT) is an Optical Line Termination, the identifier of the SSNT is its serial number, the shared medium communication link is a Passive Optical Network communication link, the identifier of the SMCL is its circuit ID, the network address is an Internet Protocol address allocated using the Dynamic Host Configuration Protocol (or alternatively, Stateless Address Autoconfiguration (SLAAC) protocol), the associating of the allocated network address with the identifier of the SMCL uses the Dynamic Host Configuration Protocol Relay Agent Information Option (or alternatively is based on at least one SLAAC message indicating the allocated network address), and the subscriber identification information comprises a unique username of the subscriber and a secret key authenticating that unique username.

According to another aspect of the invention, there is provided an authentication and registration server (ARS) system for associating subscriber identification information with an identifier of a subscriber-side network termination (SSNT), the SSNT being connected via a shared medium communication link (SMCL) to a provider-side network termination (PSNT). The identifier of the SSNT is associated with an identifier of the SMCL. The identifier of the SMCL is associated with a network address allocated to a subscriber terminal (ST) connected to the SSNT and, via the SMCL, to the PSNT. The ARS system comprising at least one server configured for the following: intercepting an internet access request from the ST, the request indicating the allocated network address; based on the indicated network address, determining the identifier of the SMCL; based on the determined identifier of the SMCL, determining the identifier of the SSNT; obtaining subscriber identification information from the ST; and associating the obtained subscriber identification information with the determined identifier of the SSNT.

It will be appreciated that the above described features, advantages and considerations also apply, *mutatis mutandis,* for embodiments of the authentication and registration server system.

According to another aspect of the invention, there is provided a network system for associating subscriber identification information with an identifier of a subscriber-side network termination (SSNT). The network system comprises the subscriber-side network termination (SSNT) and a provider-side network termination (PSNT). The PSNT is connected via a shared medium communication link (SMCL) to the SSNT. The PSNT is configured for associating the identifier of the SSNT with an identifier of the SMCL. The network system also comprises a subscriber terminal (ST) connected to the SSNT and, via the SMCL, to the PSNT; and further comprises a network address allocation server (NAAS) configured for allocating a network address to the subscriber terminal (ST). The network system further comprises an embodiment of the authentication and registration server (ARS) system as described hereinabove.

It will be appreciated that the above described features, advantages and considerations also apply, *mutatis mutandis,* for embodiments of the network system.

In an embodiment, the network system is configured for provisioning the subscriber-side network termination (SSNT) in order to provide to the subscriber at least one service to which that subscriber is subscribed, based on the association of the subscriber identification information and the identifier of the SSNT.

In an embodiment, the subscriber terminal (ST) is configured for: being connected to the subscriber-side network termination (SSNT) and, via the shared medium communication link (SMCL), to the provider-side network termination (PSNT); and for requesting allocation of a network address for the ST. Further, at least one of the provider-side network termination (PSNT) and the network address allocation server (NAAS) is configured for associating the allocated network addres with an identifier of the SMCL.

In an embodiment, the network system is configured for: relaying the requesting of the allocation of a network address and the allocating of the network address; and based on the relaying, determining the identifier of the shared medium communication link and the allocated network address.

In an embodiment, the subscriber-side network termination (SSNT) is connected to the shared medium communication link (SMCL). Also, the SSNT is configured for providing the identifier of the SSNT to the provider-side network termination (PSNT) via the SMCL, for association with the identifier of the SMCL.

In a further developed embodiment, the SSNT is configured for: examining communication on the shared medium communication link (SMCL) in order to detect a discovery window; and, when the discovery window is detected, sending therein the identifier of the subscriber-side network termination (SSNT) to the provider-side network termination (PSNT) via the SMCL.

According to another aspect of the invention, there is provided a computer program product, comprising computer-executable instructions for performing a method when the program is run on a computer, the method comprising the steps of any one of the methods described hereinabove. According to yet another aspect of the invention, there is provided a digital data storage medium encoding a machine-executable program of instructions to perform a method, the method comprising the steps of any one of the methods described hereinabove. It will be appreciated that the above described features, advantages and considerations also apply, *mutatis mutandis,* for embodiments of the computer program product and the digital data storage medium, respectively.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically a prior art approach;
Figure 2 illustrates schematically an embodiment of a network system according to the invention;
Figures 3A and 3B illustrate schematically a flowchart for an embodiment of a method according to the invention;
Figure 4 illustrates schematically a sequence diagram for an embodiment of a method according to the invention; and
Figure 5 illustrates schematically an embodiment of an authentication and registration server system according to the invention.

### Description of embodiments

Subscriber-side installation of network terminations of shared medium communication links, wherein multiple subscribers can be connected to a same provider-side communication port, is complicated. Such installation requires a way for the provider to identify a network termination of a given subscriber - that is, the provider must be able to associate the subscriber with an identifier of the subscriber-side network termination.

Currently, service providers (in short 'providers', a.k.a. operators) require subscribers (a.k.a. end-users) to provide an identifier of their network termination using out-of-band infrastructure (i.e. a communication infrastructure independent from the shared medium communication link), since the communication link to be installed is not yet operational. This approach is cumbersome.
For example, PON (Passive Optical Networks) ONT (Optical Network Termination, which is a subscriber-side network termination, in other words an equipment terminating the shared medium communication link between the provider and the subscriber at the side of the subscriber) install practice requires the subscriber to scan or enter an ONT serial number (as an identifier of the ONT, usually determined by the manufacturer of the ONT and typically displayed on the outside of the ONT). The scanning of the ONT serial number may for example be done with a mobile app. The mobile app will then register the new ONT along with subscriber identification information on back-end systems of the service provider, from which back-end systems the ONT can then be provisioned with the service or services to which the subscriber is subscribed. This approach banks on the availability of a smartphone to the subscriber. In general, these procedures are cumbersome, complicated and error-prone and/or rely on the availability of out-of-band infrastructure, like 3G (third generation), LTE (Long Term Evolution) connectivity, a rented Wi-Fi hotspot, or the like.

Alternatively, providers require expert subscriber-side installation - in other words, a trained technician must associate the identifier of the subscriber-side network termination with the subscriber, at the subscriber's premises. This approach is costly.
For the above example of PON, the technician may provide the identifier by entering a subscriber ID into the ONT equipment. This procedure is too complex for the subscriber to carry out.

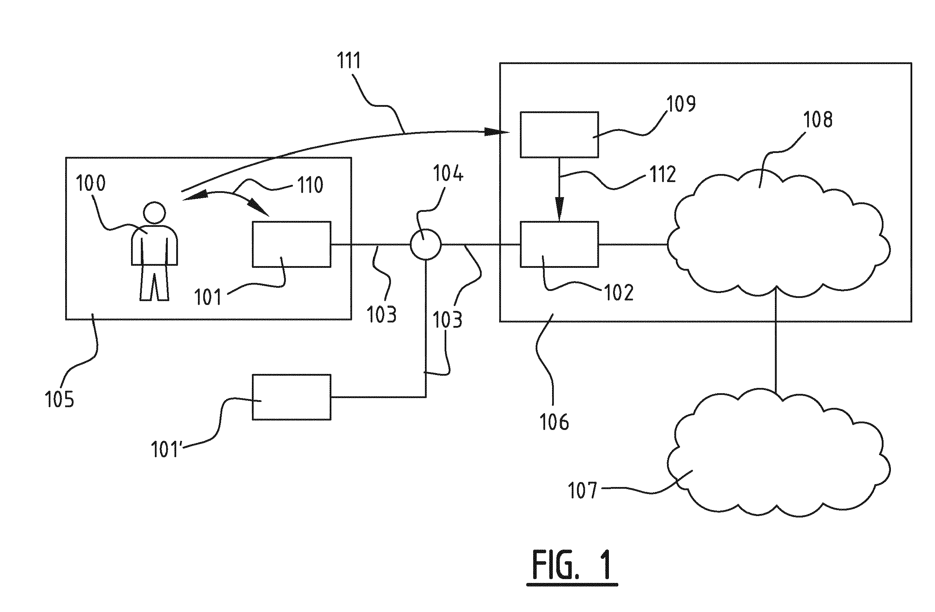

Figure 1 illustrates schematically a prior art approach for the above. The figure shows a subscriber 100 and her Optical Network Termination (ONT) 101 on the subscriber premises 105. The ONT is connected via a passive optical network (PON) 103 (which is a shared medium communication link) to a Optical Line Termination (OLT) 102. In this figure, the PON 103 comprises a splitter 104 linked to another ONT 101'. The figure further shows a provider network 106, in which the OLT 102 is situated, along with a provider access network 108 that is connected to the internet 107, and along with a back-end server 109 connected 112 to the OLT 102.
The figure shows the installation of the ONT 101 by the subscriber 100, who has to capture 110 a serial number identifying the ONT 101, and who has to transmit 111 the captured serial number and her identification information to the back-end server 109 using an out-of-band interface, because the PON communication link 103 is not operational yet. Afterwards, the back-end server 109 can (re)configure the OLT 102 in order to provide appropriate services for the subscriber 100.

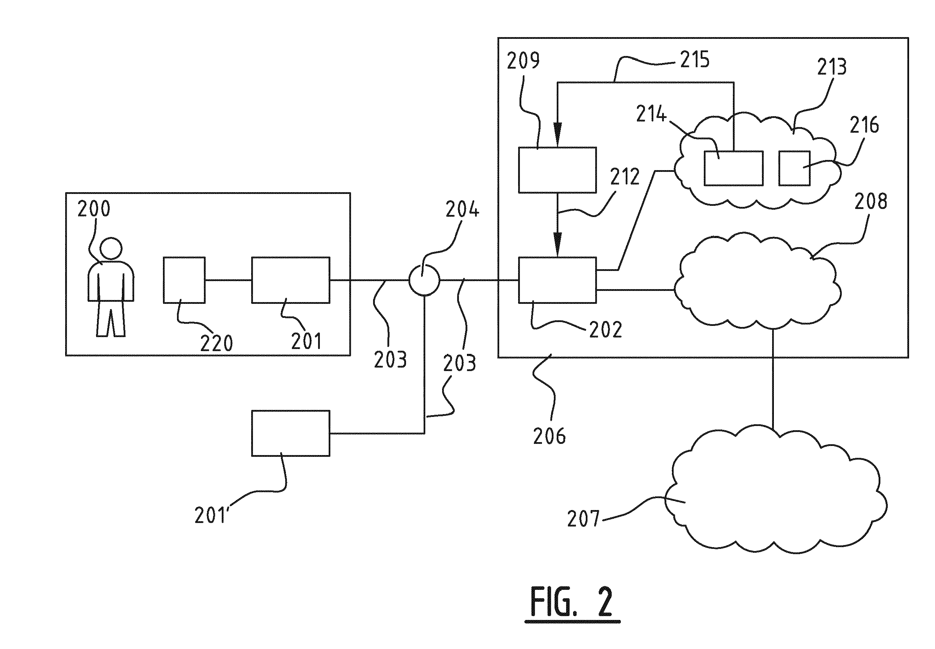

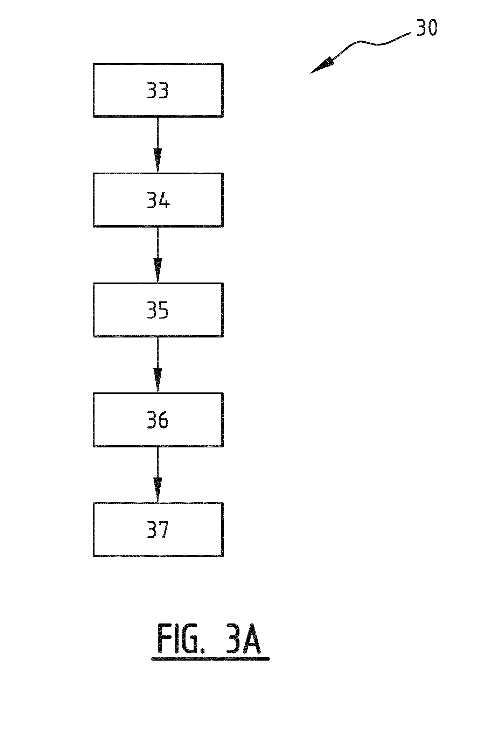

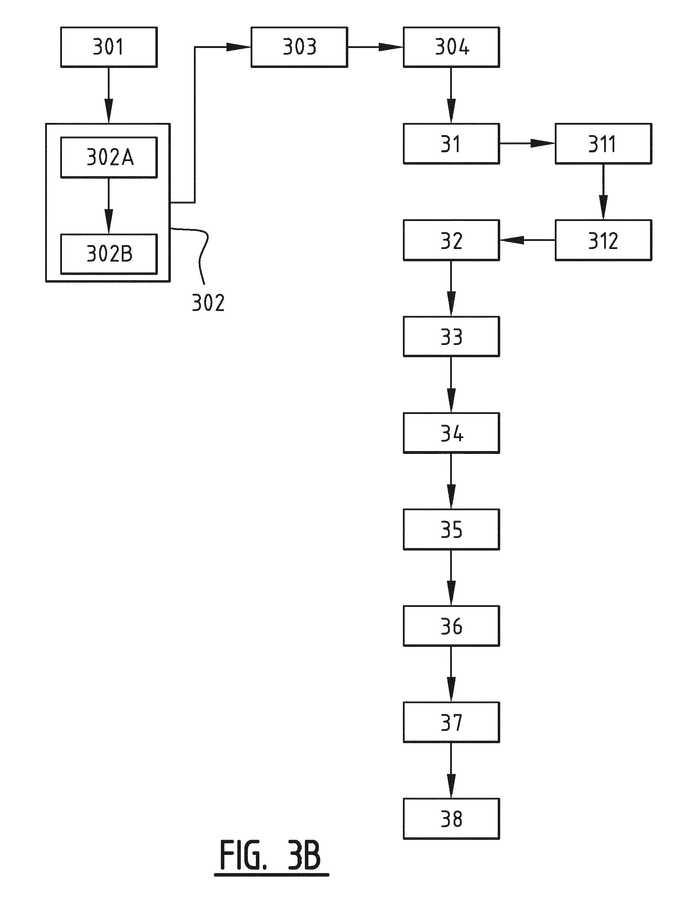

Figure 2 illustrates schematically an embodiment of a network system according to the invention. The figure shows a subscriber 200 and her subscriber-side network termination (SSNT) 201 on the subscriber premises 205, along with a subscriber terminal (ST) 220, such as a personal computer or a smartphone. The SSNT is connected via a shared medium communication link (SMCL) 203, which may for example be a passive optical network, or a wireless radio network, or another shared medium communication link, to a provider-side network termination (PSNT) 202. In this figure, the SMCL 203 comprise a splitter 204 linked to another SSNT 201'. The figure further shows a provider network 206, in which the PSNT 202 is situated, along with a provider access network 208 that is connected to the internet 207, and along with a back-end server 209 (for administering the service provider's network) that is connected 212 to the PSNT 202. Further, the figure shows a captive network 213, which is a restricted part of the provider network 206, and which in - in this figure - comprises an authentication and registration server (ARS) system 214 and a network address allocation server (NAAS) 216. The figure also shows explicitly how the authentication and registration server (ARS) system 214 is connected 215 to the back-end server 209, although in other embodiments the functionality of the back-end server 209 could be included in the ARS system 214. In further developed embodiments, the functionality of the NAAS 216 could additionally or alternatively be included in the ARS system 214.
Operation of entities shown in Figure 2 corresponds to the operation described below with reference to Figures 3A and 3B.

Figures 3A and 3B each illustrate schematically a flowchart for an embodiment of a method according to the invention. In Figure 3A, there is shown an embodiment of a method 30 according to the invention, for associating subscriber identification information with an identifier of a subscriber-side network termination (SSNT) 201 as shown in Figure 2. The SSNT 201 is connected via a shared medium communication link (SMCL) 203 to a provider-side network termination (PSNT) 202. The identifier of the SSNT 201 is associated with an identifier of the SMCL 203, for example by the PSNT 202. The association may be explicit in that two separate pieces of data are coupled in a mapped relationship, or may be implicit in that the SMCL identifier may encode the SSNT identifier (for example, by indirectly or directly indicating rack number, shelf number, slot number, etc.) and may thus allow to deduce the SSNT identifier from the SMCL identifier. Further, the identifier of the SMCL is associated, for example by the PSNT 202 or by the NAAS 216, with a network address allocated (for example by the NAAS 216) to a subscriber terminal (ST) connected to the SSNT and, via the SMCL, to the PSNT. The method comprises intercepting 33 an internet access request from the ST 220, the request indicating the allocated network address. The internet access request may e.g. be intended to access the internet 207 via the provider access network 208. The method comprises, based on the indicated network address, determining 34 the associated identifier of the SMCL 203. The method comprises, based on the determined identifier of the SMCL 203, determining 35 the associated identifier of the SSNT 201.

The method comprises obtaining 36 subscriber identification information from the ST 220. The method also comprises associating 37 the obtained subscriber identification information with the determined identifier of the SSNT 201.

In Figure 3B, there is shown another embodiment of a method according to the invention, for associating subscriber identification information with an identifier of a subscriber-side network termination (SSNT) 201 as shown in Figure 2. The SSNT 201 is connected via a shared medium communication link (SMCL) 203 to a provider-side network termination (PSNT) 202. In this embodiment, the PSNT 202 has associated the identifier of the SSNT 201 with an identifier of the SMCL 203, because it is well-situated to do so. For that associating, the method may, in some embodiments, as in the one shown here, comprise connecting 301 the subscriber-side network termination (SSNT) 201 to the shared medium communication link (SMCL) 203, and providing 302 the identifier of the SSNT 201 to the provider-side network termination (PSNT) 202 via the SMCL 203, thus allowing the PSNT 202 to associate the identifiers. Figure 3B further shows a more detailed view of the providing 302, wherein the providing 302 comprises examining 302A communication on the shared medium communication link (SMCL) 203 in order to detect a discovery window, and, when the discovery window is detected, sending 302B therein the identifier of the subscriber-side network termination (SSNT) 201 to the provider-side network termination (PSNT) 202 via the SMCL 203. The detection of the discovery window allows to notify the PSNT 202 of the SSNT's 201 presence without disturbing other PSNTs 201' that might also be connected to the shared medium communication link (SMCL) 203.
Further, the method as shown here comprises the steps of connecting 303 the subscriber terminal (ST) 220 to the subscriber-side network termination (SSNT) 201 and, via the shared medium communication link (SMCL) 203, to the provider-side network termination (PSNT) 202, and requesting 304 allocation of a network address for the ST 220, e.g. from a network address allocation server (NAAS) 216 coupled to the captive network.
Further, the method comprises allocating 31 a network address to a subscriber terminal (ST) 220 connected to the SSNT 201 and, via the SMCL 203, to the PSNT 202. The method as shown also comprises relaying 311 the requesting 304 of the allocation of a network address and the allocating 31 of the network address, and, based on the relaying 311, determining 312 the identifier of the shared medium communication link 203 and the allocated network address.
Further, the method comprises associating 32 the allocated network address with the identifier of the SMCL 203. The method comprises intercepting 33 an internet access request from the ST 220, the request indicating the allocated network address. The method comprises, based on the indicated network address, determining 34 the associated identifier of the SMCL 203. The method comprises, based on the determined identifier of the SMCL 203, determining 35 the associated identifier of the SSNT 201. The method comprises obtaining 36 subscriber identification information from the ST 220. The method also comprises associating 37 the obtained subscriber identification information with the determined identifier of the SSNT 201.
Further, the method comprises the optional step of provisioning 38 the subscriber-side network termination (SSNT) 201 in order to provide to the subscriber 200 at least one service to which that subscriber 200 is subscribed, based on the association of the subscriber identification information and the identifier of the SSNT 201. The provisioning 38 may e.g. be performed by the back-end server 209 of Figure 2 through connection 212, at the causation of the authentication and registration server system 214 through connection 215

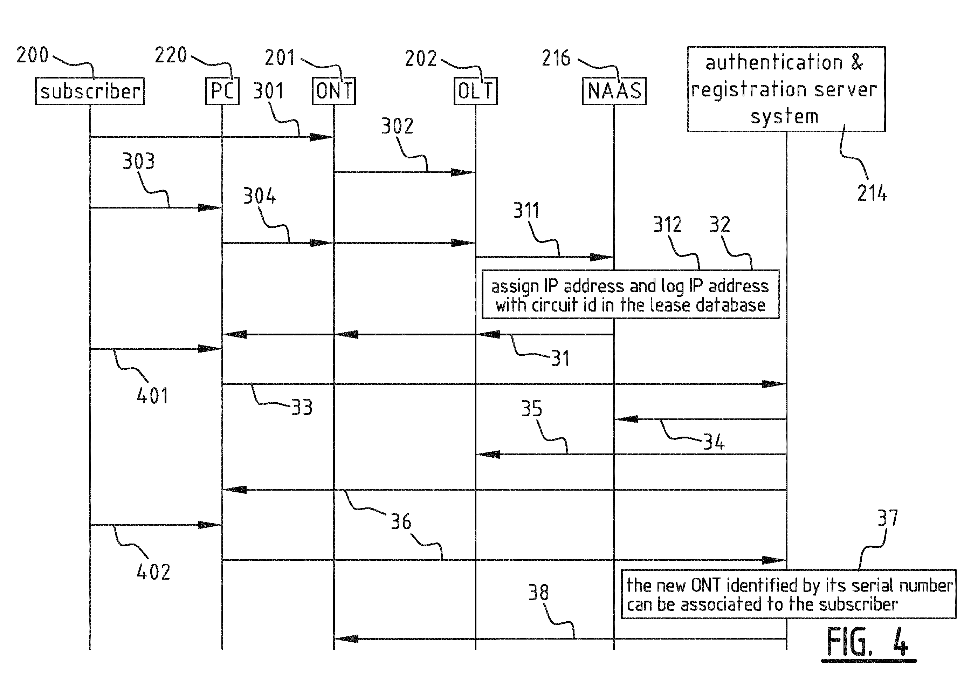

Figure 4 illustrates schematically a sequence diagram for an embodiment of a method according to the invention. Figure 4 shows a number of specific technologies used for implementing certain steps of the method (and a number of specific technologies used for implementing certain entities of the corresponding system). Nevertheless, the skilled person will understand that these specific technologies are only shown here by way of example, and are intended to limit in no way the scope of the present invention. In particular, it will be evident to the skilled person that other types of shared medium communication links than PON could also be used, such as wireless radio network communication links, or coax, *et cetera.*

Figure 4 shows how a subscriber 200 unpacks her Optical Network Termination (ONT) 201, which is an example subscriber-side network termination (SSNT) 201, and connects 301 that to the shared medium communication link (SMCL) 203, in this example a fibre network 203. Of course, the subscriber 200 also connects the ONT 201 to the power network and powers it on.
Next, the ONT 201 boots up, and signals its presence and its serial number (i.e. an identifier identifying the ONT 201) 302 to an Optical Line Termination (OLT) 202 (which is an example provider-side network termination (PSNT) 202) on the fibre network 203. The signalling can involve examining 302A communication on the SMCL, the detection of a discovery window, and sending 302B the relevant data during the discovery window.
Next, the OLT 202 can associate the ONT's 201 serial number (thus an identifier of the SSNT 201) and an identifier of the SMCL 203, namely the circuit ID of the fibre network line to which the ONT 201 is connected. Also, the newly connected ONT 201 is connected to the captive service network 213 as discussed above, for example by setting up a Virtual Local Area Network (VLAN) providing a logical pipe for communication from the ONT 201 to the OLT 202. This setting up may e.g. be performed by a back-end server 209, which is notified of the new connection of the ONT 201 by the OLT 202.
Next, the subscriber 200 connects 303 a personal computer (PC) 220 (which is an example subscriber terminal (ST) 220), e.g. to an Ethernet port of the ONT 201. Then, the PC 220 will request 304 allocation of a network address (e.g. an Internet Protocol (IP) address), for example from a network address allocation server (NAAS) 216 (which may for example be a DHCP server 216, thus using a DHCP request) -PCs 220, when connected to such a network, are typically configured for automatically requesting such a network address allocation. The request 304 passes via the ONT 201 and via the OLT 202, which relays it to the NAAS 216 in the captive service network 213 (e.g. using the VLAN). The OLT 202 can insert an identifier of the SMCL 203, in this example the circuit ID defining the line of the fibre network 203 to which the ONT 201 is connected, e.g. using DHCP Option 82 (in full: Dynamic Host Configuration Protocol Relay Agent Information Option) to indicate the circuit ID. The OLT 202 can relay 311 the DHCP request to the NAAS 216 in the captive service network 213. The NAAS 216 then assigns a network address (e.g. an IP address). In the example shown here, the NAAS 216 determines 312 and associates 32 the IP address with the circuit ID (in other words, the allocated network address with the identifier of the SMCL 203), e.g. in its lease database. Alternatively, the association (and storing) thereof could be done by the authentication and registration server system 214, or even by the OLT 202. Then, the IP address is allocated 31 to the PC 220, via the reverse path.
Next, the subscriber 200 opens a browser or the like and goes to any page, thus triggering an internet access request 401. This request 401 is intercepted 33 to the captive service network 213, in particular to the authentication and registration server system 214. The request 401, being an internet access request 401, indicates the IP address of the PC 220, since this is the source address of the request 401. Then, the authentication and registration server system 214 queries 34 the NAAS 216 for the circuit ID matching the IP address, and queries 35 the OLT 202 for the ONT's 201 serial number matching the circuit ID. In other words, the authentication and registration server system 214 determines the ONT's 201 serial number (in other words, the identifier of the SSNT 201) based on associations stored at the authentication and registration server system 214, or elsewhere (e.g. at the NAAS 216 or at the OLT 202).
Next, the authentication and registration server system 214 provides to the subscriber 200 an authentication page (e.g. by displaying on the PC 220 a web page that requests the subscriber's 200 username and password, as agreed upon earlier by the provider and the subscriber 200, or as indicated on the ONT 201.). The subscriber 200 then provides 402 the required identification information (for example by filling in a web page configured for proving her identity, based on a unique username and a password associated therewith) which is obtained 36 by the authentication and registration server system 214.
Next, the obtained subscriber identification information can be associated by the authentication and registration server system 214 with the determined identifier of the ONT 201 (i.e. its serial number).
This association allows the provider to retrieve from its database the one or more services (e.g. in the context of Triple Play services) to which the subscriber 200 is subscribed, and to provision 38 these one or more services in the ONT 201.

Thus, embodiments of the method overcome the requirement of scanning or entering a serial number, or of entering a subscriber ID in the ONT 201. Instead, when a new ONT 201 is connected to the network 203, the ONT 201 is detected and it will be provisioned with a captive service. The captive service network 213 is a closed network that offers limited IP (Internet Protocol) connectivity. Connectivity is limited to access to an authentication and registration server system 214. When the subscriber 200 connects a PC (Personal Computer) 220 to this newly connected ONT 201, the PC 220 will obtain an IP address from a DHCP (Dynamic Host Configuration Protocol) server 216 present in the captive service network 213. The OLT 202 to which the ONT 201 is connected will insert option 82 in the DHCP dialog. The DHCP server 216 will log 52 the option 82, together with the assigned IP address in its lease database 50. When the subscriber 200 opens a browser 401, it will be redirected to the authentication and registration server system 216. The authentication and registration server system 216 will acquire the IP address of the PC 220 that connects. The authentication and registration server system 216 will then query the DHCP server 216 for the circuit ID matching this IP address. The self authentication and registration server system 216 can now use the circuit ID to query the OLT 202 for the matching ONT 201 serial number. This procedure allows the authentication and registration server system 216 to acquire the ONT's 201 serial number without cumbersome interaction with the subscriber 200.

Alternatively, the ARS system 214 may retrieve the association between the circuit ID and/or the network address on the one hand and the identifier of the ONT 201 on the other hand from a dedicated database instead of from the NAAS 216 and/or from the OLT 202. The database can be updated by, for example, the NAAS 216, the OLT 202, or both.

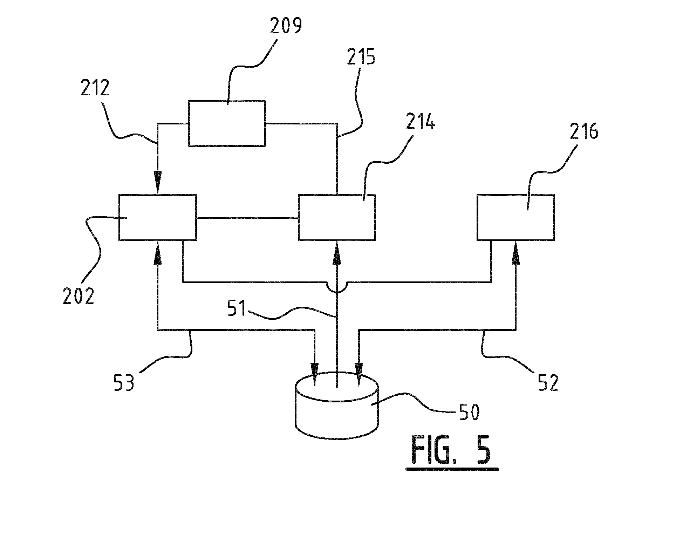

Figure 5 illustrates schematically an embodiment of an authentication and registration server (ARS) system according to the invention. This embodiment corresponds *mutatis mutandis* with the embodiment of the network system as shown in Figure 2. Figure 5 in particular shows a database 50 which is configured to store a number of associations, e.g. associations between network addresses and identifiers of SMCLs 203. To that end, the database 50 may be connected 51 to the authentication and registration server system 214 such that the ARS system 214 can read from the database, and/or may be connected 52 to the optional NAAS 216 such that that can store therein the association between the allocated network address and the SMCL 203 identifier, and/or may be connected 53 to the PSNT 202 such that that can store the associations, or even to a number of these or all of these.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein the instructions perform some or all of the steps of the above-described methods. The program storage devices may be, e.g., digital memories, magnetic storage media such as a magnetic disks and magnetic tapes, hard drives, or optically readable digital data storage media. The embodiments are also intended to cover computers programmed to perform the steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer.

Whilst the principles of the invention have been set out above in connection with specific embodiments, it is to be understood that this description is merely made by way of example and not as a limitation of the scope of protection which is determined by the appended claims.

## Claims

1. A method for associating subscriber identification information with an identifier of a subscriber-side network termination (SSNT), the SSNT being connected via a shared medium communication link (SMCL) to a provider-side network termination (PSNT), wherein the identifier of the SSNT is associated with an identifier of the SMCL, and wherein the identifier of the SMCL is associated with a network address allocated to a subscriber terminal (ST) connected to the SSNT and, via the SMCL, to the PSNT; the method comprising:
- intercepting an internet access request from the ST, the request indicating the allocated network address;
- based on the indicated network address, determining the identifier of the SMCL;
- based on the determined identifier of the SMCL, determining the identifier of the SSNT;
- obtaining subscriber identification information from the ST; and
- associating the obtained subscriber identification information with the determined identifier of the SSNT.

2. The method of claim 1, the method comprising:
- provisioning the subscriber-side network termination (SSNT) in order to provide to the subscriber at least one service to which that subscriber is subscribed, based on the association of the subscriber identification information and the identifier of the SSNT.

3. The method of any one of the previous claims, the method comprising:
- connecting the subscriber terminal (ST) to the subscriber-side network termination (SSNT) and, via the shared medium communication link (SMCL), to the provider-side network termination (PSNT);
- requesting allocation of a network address for the ST;
- allocating a network address to a subscriber terminal (ST) connected to the SSNT and, via the SMCL, to the PSNT; and
- associating the allocated network address with the identifier of the SMCL.

4. The method of any one of the previous claims, the method comprising:
- relaying the requesting of the allocation of a network address and the allocating of the network address; and
- based on the relaying, determining the identifier of the shared medium communication link and the allocated network address.

5. The method of any one of the previous claims, the method comprising:
- connecting the subscriber-side network termination (SSNT) to the shared medium communication link (SMCL); and
- providing the identifier of the SSNT to the provider-side network termination (PSNT) via the SMCL, for association with the identifier of the SMCL.

6. The method of claim 5, wherein the providing comprises:
- examining communication on the shared medium communication link (SMCL) in order to detect a discovery window; and
- when the discovery window is detected, sending therein the identifier of the subscriber-side network termination (SSNT) to the provider-side network termination (PSNT) via the SMCL.

7. The method of any one of the previous claims, wherein:
- the subscriber-side network termination (SSNT) is an Optical Network Termination;
- the provider-side network termination (PSNT) is an Optical Line Termination;
- the identifier of the SSNT is its serial number;
- the shared medium communication link is a Passive Optical Network communication link;
- the identifier of the SMCL is its circuit ID;
- the network address is an Internet Protocol address allocated using the Dynamic Host Configuration Protocol;
- the associating of the allocated network address with the identifier of the SMCL uses the Dynamic Host Configuration Protocol Relay Agent Information Option;
- the subscriber identification information comprises a unique username of the subscriber and a secret key for authenticating that unique username.

8. An authentication and registration server (ASR) system for associating subscriber identification information with an identifier of a subscriber-side network termination (SSNT), the SSNT being connected via a shared medium communication link (SMCL) to a provider-side network termination (PSNT), wherein the identifier of the SSNT is associated with an identifier of the SMCL, and wherein the identifier of the SMCL is associated with a network address allocated to a subscriber terminal (ST) connected to the SSNT and, via the SMCL, to the PSNT; the ARS system comprising at least one server configured for:
- intercepting an internet access request from the ST, the request indicating the allocated network address;
- based on the indicated network address, determining the identifier of the SMCL;
- based on the determined identifier of the SMCL, determining the identifier of the SSNT;
- obtaining subscriber identification information from the ST; and
- associating the obtained subscriber identification information with the determined identifier of the SSNT.

9. A network system for associating subscriber identification information with an identifier of a subscriber-side network termination (SSNT); the network system comprising:
- the subscriber-side network termination (SSNT);
- a provider-side network termination (PSNT), the PSNT being connected via a shared medium communication link (SMCL) to the SSNT, the PSNT being configured for associating the identifier of the SSNT with an identifier of the SMCL;
- a subscriber terminal (ST) connected to the SSNT and, via the SMCL, to the PSNT;
- a network address allocation server (NAAS) configured for allocating a network address to the ST; and
- an authentication and registration server (ARS) system according to claim 8.

10. The network system of claim 9, configured for:
- provisioning the subscriber-side network termination (SSNT) in order to provide to the subscriber at least one service to which that subscriber is subscribed, based on the association of the subscriber identification information and the identifier of the SSNT.

11. The network system of any one of the claims 9-10, wherein the subscriber terminal (ST) is configured for:
- being connected to the subscriber-side network termination (SSNT) and, via the shared medium communication link (SMCL), to the provider-side network termination (PSNT); and for
- requesting allocation of a network address for the ST; and
wherein at least one of the provider-side network termination (PSNT) and the network address allocation server (NAAS) is configured for associating the allocated network addres with an identifier of the SMCL..

12. The network system of any one of the claims 9-11, configured for:
- relaying the requesting of the allocation of a network address and the allocating of the network address; and
- based on the relaying, determining the identifier of the shared medium communication link and the allocated network address.

13. The network system of any one of the claims 9-12, wherein:
- the subscriber-side network termination (SSNT) is connected to the shared medium communication link (SMCL); and
- the SSNT is configured for providing the identifier of the SSNT to the provider-side network termination (PSNT) via the SMCL, for association with the identifier of the SMCL.

14. The network system of claim 13, wherein the SSNT is configured for:
- examining communication on the shared medium communication link (SMCL) in order to detect a discovery window; and
- when the discovery window is detected, sending therein the identifier of the subscriber-side network termination (SSNT) to the provider-side network termination (PSNT) via the SMCL.

15. A computer program product, comprising computer-executable instructions for performing a method when the program is run on a computer, the method comprising the steps of any one of the methods of the claims 1-7.
